(19) Europäisches Patentamt
European Patent Office
Office européen des brevets

(11) EP 0 743 342 B1

(12) EUROPÄISCHE PATENTSCHRIFT

(45) Veröffentlichungstag und Bekanntmachung des Hinweises auf die Patenterteilung:
**01.03.2000 Patentblatt 2000/09**

(51) Int Cl.[7]: **C08L 55/02**

(21) Anmeldenummer: **96107067.9**

(22) Anmeldetag: **06.05.1996**

(54) **Thermoplastische ABS-Formmassen**

ABS thermoplastic mouldings

Masses à moules thermoplastiques de type ABS

(84) Benannte Vertragsstaaten:
**BE DE ES FR GB IT NL**

(30) Priorität: **17.05.1995 DE 19518025**

(43) Veröffentlichungstag der Anmeldung:
**20.11.1996 Patentblatt 1996/47**

(73) Patentinhaber: **BAYER AG**
**51368 Leverkusen (DE)**

(72) Erfinder:
- **Eichenauer, Herbert, Dr.**
  **41539 Dormagen (DE)**
- **Leitz, Edgar, Dr.**
  **41541 Dormagen (DE)**
- **Piejko, Karl-Erwin, Dr.**
  **51467 Bergisch Gladbach (DE)**
- **Krüger, Peter, Dr.**
  **51375 Leverkusen (DE)**

(56) Entgegenhaltungen:
**EP-A- 0 319 848** **EP-A- 0 485 793**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 743 342 B1

## Beschreibung

ABS-Formmassen werden schon seit Jahren in großen Mengen als thermoplastische Harze für die Herstellung von Formteilen aller Art eingesetzt. Dabei reicht das Eigenschaftsspektrum dieser Harze von relativ spröde bis hochzäh.

Ein spezielles Einsatzgebiet für ABS-Formmassen ist die Herstellung von Formteilen mit hohen Anforderungen an die Zähigkeit bei Schlageinwirkung, insbesondere auch bei tiefen Temperaturen, sowie die Möglichkeit zur gezielten Einstellung der Oberflächenhärte bzw. des E-Moduls (z.B. Herstellung von Teilen mit hoher Steifigkeit und guter Kratzfestigkeit im Automobilbereich oder bei der Herstellung von Gehäuseteilen) bei gleichzeitiger sehr guter thermoplastischer Verarbeitbarkeit unter Erhalt der sonstigen ABS-typischen Eigenschaften (z.B. guter Oberflächenglanz, gute Wärmeformbeständigkeit).

Eine Möglichkeit, diese Eigenschaften zu erreichen, ist die Verwendung von ABS-Polymerisaten, bei denen die Kautschukphase eine spezielle gezackte Struktur aufweist (siehe Deutsche Patentanmeldung P 4 441 846.9). Allerdings kann es bei Verwendung dieser Polymerisate bei der Herstellung von eingefärbten Formteilen mit Rippenstrukturen zu einer Farbvertiefung hinter den Rippen kommen, wodurch optisch der Eindruck einer ungleichmäßigen Einfärbung resultiert.

Es bestand daher die Aufgabe, Formmassen bereitzustellen, die unter weitgehendem Erhalt der obengenannten guten Eigenschaften zu keiner Farbvertiefung führen.

Es wurde gefunden, daß durch eine spezielle Kombination von über Emulsionspolymerisation hergestellten ABS-Polymerisaten mit speziellen Strukturen Produkte mit den oben beschriebenen Eigenschaftskombinationen eingestellt werden können, ohne daß eine störende Farbvertiefung hinter Rippen auftritt.

Gegenstand der Erfindung sind thermoplastische Formmassen enthaltend:

A) 5 bis 95 Gew.-Teile mindestens eines durch Emulsionspolymerisation hergestellten teilchenförmigen Pfropfkautschukpolymeren vom ABS-Typ, bei dem die Pfropfkautschukteilchen eine solche über transmissionselektronenmikroskopische Aufnahmen detektierbare Struktur aufweisen, in der die einzelnen Teilchen ungleichmäßige zellenförmige Einschlüsse von harzbildendem Polymer enthalten und die Oberfläche der Teilchen eine solche unregelmäßig gezackte Struktur zeigt, daß pro abgebildetem Teilchen 5 bis 30 solcher Zacken vorhanden sind, die sich von einem idealisierten runden Teilchen (mit einem Durchmesser d) durch einen Durchmesser d + d/x mit x = 3 bis 15 unterscheiden, erhältlich durch Emulsionspolymerisation von harzbildenden Monomeren in Gegenwart des in Latexform vorliegenden Kautschuks mit einem Quellungsindex >30 (in Toluol) und mit einer Glastemperatur unterhalb von 0°C derart, daß während 25 bis 90 % der Gesamtreaktionszeit im Reaktionsgemisch eine Menge von 5 bis 70 Gew.-% (bezogen auf gesamtes bis zum jeweiligen Zeitpunkt eingesetztes) an nicht umgesetzten Monomer vorhanden ist,

B) 95 bis 5 Gew.-Teile mindestens eines durch Emulsionspolymerisation hergestellten teilchenförmigen Propfkautschukpolymeren vom ABS-Typ, bei dem die Pfropfkautschukteilchen eine Solche über transmissionselektronenmikroskopische Aufnahmen detektierbare Struktur aufweisen, in der die einzelnen Teilchen keine ausgeprägte Innenstruktur wie in A) aufweisen und eine runde Teilchenform mit völlig zackenfreier Oberfläche zeigen und gegebenenfalls

C) 0 bis 300 Gew.-Teile mindestens eines thermoplastischen kautschukfreien Harzes.

Die Herstellung des Pfropfkautschukpolymeren A) erfolgt durch Emulsionspolymerisation von harzbildenden Monomeren in Gegenwart des in Latexform vorliegenden Kautschuks.

Dazu werden vorzugsweise 40 bis 90 Gew.-Teile, besonders bevorzugt 45 bis 85 Gew.-Teile und ganz besonders bevorzugt 50 bis 80 Gew.-Teile eines harzbildenden Monomeren (vorzugsweise ein Gemisch aus Styrol und Acrylnitril, das gegebenenfalls bis zu 50 Gew.-% (bezogen auf die Gesamtmenge der in der Pfropfpolymerisation eingesetzten Monomeren) eines oder mehrerer Comonomerer enthalten kann) in Gegenwart von 10 bis 60 Gew.-Teilen, bevorzugt 15 bis 55 Gew.-Teilen und besonders bevorzugt 20 bis 50 Gew.-Teilen (jeweils gerechnet als Feststoff) eines Kautschuklatex (vorzugsweise Polybutadienlatex) mit einem Quellungsindex ≥30, vorzugsweise ≥40 und besonders bevorzugt ≥50 (in Toluol) derart polymerisiert, daß während 25 bis 90 %, vorzugsweise 30 bis 80 % und besonders bevorzugt 35 bis 75 % der Gesamtreaktionszeit im Reaktionsgemisch eine Menge von 5 bis 70 Gew.-%, vorzugsweise 7,5 bis 60 Gew.-% und besonders bevorzugt 10 bis 50 Gew.-% (bezogen auf gesamtes bis zum jeweiligen Zeitpunkt eingesetztes Monomer) an nicht umgesetztem Monomer vorhanden ist.

Als Kautschuke zur Herstellung des Pfropfkautschukpolymeren A) werden solche mit einer Glasübergangstemperatur unter 0°C eingesetzt.

Geeignet sind z.B.:

- Dienkautschuke, das heißt, Homopolymerisate von konjugierten Dienen mit 4 bis 8 C-Atomen wie Butadien, Isopren, Chloropren oder deren Copolymerisate mit bis zu 60 Gew.-%, bevorzugt 1 bis 30 Gew.-%, eines Vinylmonomeren, z.B. Acrylnitril, Methacrylnitril, Styrol, $\alpha$-Methylstyrol, Halogenstyrole, $C_1$-$C_4$-Alkylstyrole, $C_1$-$C_6$-Alkylacrylate und -methacrylate, Alkylenglykoldi-acrylate und -methacrylate sowie Divinylbenzol;

- Acrylatkautschuke, das heißt, Homo- und Copolymerisate von $C_1$-$C_{10}$-Alkylacrylaten, z.B. Homopolymerisate von Ethylacrylat, Butylacrylat, 2-Ethylhexylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure (ester), Vinylsulfonsäure. Bevorzugt werden solche Acrylatkautschukhomo- bzw. -copolymerisate eingesetzt, die 0,01 bis 8 Gew.-% Divinyl- oder Polyvinylverbindungen und/oder N-Methylolacrylamid- (oder -methacrylamid)-Derivate enthalten, die als Vernetzer wirken, z.B. Divinylbenzol, Triallylcyanurat und wobei der Kautschuk C=C-Doppelbindungen enthält;

- Terpolymer-Kautschuke, das heißt, Copolymerisate aus mono-olefinischen Kohlenwasserstoffen, z.B. Ethylen, Propylen und Diene, z.B. Butadien, Cyclopentadien.

Bevorzugt sind Polybutadienkautschuke und SBR-Kautschuke mit bis zu 30 Gew.-% einpolymerisiertem Styrol, besonders bevorzugt ist Polybutadien.
Die zur Herstellung des Pfropfkautschukpolymeren A) einzusetzenden Kautschukpolymerisate weisen Quellungsindices (in Toluol) $\geq 30$, vorzugsweise $\geq 40$ und besonders bevorzugt $\geq 50$, auf. Dabei erfolgt die Ermittlung der Quellungsindices folgendermaßen:
1 g trockener stabilisierter kleingeschnittener Kautschuk wird mit 100 $cm^3$ Toluol versetzt und 24 h in einer braunen Flasche geschüttelt. Dann wird über einen doppelten Stoffilter abgesaugt bis das Filtrat keinen Niederschlag mehr aufweist. Nach dem Waschen mit weiterem Toluol wird der Niederschlag feucht gewogen. Danach wird bei 70°C im Trockenschrank bis zur Gewichtskonstanz getrocknet und erneut gewogen. Der Quellungsindex (QI) ergibt sich aus dem Verhältnis

$$QI = \frac{\text{Niederschlag (feucht)}}{\text{Niederschlag (trocken)}}.$$

Die Herstellung von Kautschuken mit solchen Quellungsindices ist prinzipiell bekannt, die geforderten Werte werden durch Anwendung geeigneter Reaktionsbedingungen (z.B. niedrige Reaktionstemperatur oder Zusatz von Molekulargewichtsreglern wie z.B. Mercaptane) eingestellt.
Die Größe der zur Herstellung des Pfropfkautschukpolymeren A) einzusetzenden Kautschukteilchen kann in weiten Grenzen variiert werden, z.B. sind prinzipiell mittlere Teilchendurchmesser von ca. 50 nm bis ca. 500 nm möglich; bevorzugt sind Kautschukteilchen mit mittleren Durchmessern von ca. 200 nm bis ca. 400 nm, besonders bevorzugt von ca. 250 nm bis ca. 350 nm. Hierbei bedeuten mittlere Teilchendurchmesser $d_{50}$-Werte, die durch Ultrazentrifugenmessung (vgl. W. Scholtan und H. Lange in Kolloid-Z. und Z. Polymere 250, S. 782-796 (1972) bestimmt wurden.
Bei der Pfropfkautschukherstellung eingesetzte harzbildende Monomere sind vorzugsweise Verbindungen mit einer Vinylgruppe, z.B. Styrol, $C_1$-$C_4$-alkylsubstituierte Styrole, $\alpha$-Methylstyrol, Acrylnitril, Methacrylnitril, Ester der Acrylsäure und/oder der Methacrylsäure mit $C_1$-$C_8$-aliphatischen oder cycloaliphatischen Alkoholen, N-substituiertes Maleinimid oder Mischungen daraus. Besonders bevorzugt sind Mischungen aus Styrol und Acrylnitril, vorzugsweise im Gewichtsverhältnis 60:40 bis 80:20, wobei Styrol und/oder Acrylnitril teilweise durch copolymerisierbare Monomere, vorzugsweise durch $\alpha$-Methylstyrol, Methylmethacrylat oder N-Phenylmaleinimid, ersetzt werden können.
Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge bei der Pfropfpolymerisationsreaktion).
Geeignete Molekulargewichtsregler sind beispielsweise n-Dodecylmercaptan, t-Dodecylmercaptan, dimeres $\alpha$-Methylstyrol.
Als Initiatoren kommen praktisch alle als Radikalbildner fungierende Substanzen in Betracht. Beispiele hierfür sind anorganische und organische Peroxide, z.B. $H_2O_2$, Di-tert.-butylperoxid, Cumolhydroperoxid, Dicyclohexylpercarbonat, tert.-Butylhydroperoxid, p-Menthanhydroperoxid, Azoinitiatoren wie z.B. Azobisisobutyronitril, anorganische Persalze wie Ammonium-, Natrium- oder Kaliumpersulfat, Kaliumperphosphat, Natriumperborat sowie Redox-Systeme, die sich aus einem in der Regel organischen Oxidationsmittel und einem Reduktionsmittel zusammensetzen, wobei vorzugsweise im Reaktionsmedium zusätzlich Schwermetallionen vorhanden sind (siehe H. Logemann in Houben-Weyl, Methoden der Organischen Chemie, Band 14/1, S. 263 bis 297).
Bevorzugte Initiatoren sind Ammonium-, Natrium- und Kaliumpersulfat, besonders bevorzugt ist Kaliumpersulfat.

Die Reaktionstemperatur bei der Pfropfkautschukherstellung ist 30° bis 150°C, vorzugsweise 40° bis 90°C.

Als Emulgatoren können die üblichen anionischen Emulgatoren wie Alkylsulfate, Alkylsulfonate, Aralkylsulfonate, Seifen alkalischer disproportionierter oder hydrierter Abietin- oder Tallölsäuren, Seifen gesättigter oder ungesättigter Fettsäuren, Emulgatoren auf Basis von Verbindungen mit cyclischen Kohlenwasserstoffgerüsten gemäß DE-OS 3 919 548 und DE-OS 3 925 634 verwendet werden, vorzugsweise werden Emulgatoren mit Carboxylgruppen (z. B. Salze von $C_{10}$-$C_{18}$-Fettsäuren, Salze der disproportionierten Abietinsäure) eingesetzt.

Die Struktur der Pfropfkautschukteilchen A) kann durch transmissionselektronenmikroskopische Verfahren (z.B. nach Kontrastierung mit Osmiumtetroxid, vgl. z.B. J.A. Manson, L.H. Sperling: Polymer Blends and Composites (Plenum Press, New York/London, 1976), S. 57-58 und dort zitierte Literatur) detektiert werden. Dabei müssen die Pfropfkautschukteilchen A) in den elektronenmikroskopischen Aufnahmen (das heißt, in der Abbildung der Schnittfläche) ungleichmäßige zellenförmige Einschlüsse des harzbildenden Polymeren enthalten und eine unregelmäßig gezackte Struktur an der Teilchenoberfläche zeigen. Es müssen pro Teilchen 5 bis 30, vorzugsweise 7 bis 25 und besonders bevorzugt 10 bis 20 Zacken vorhanden sein, die sich von einem idealisierten runden Teilchen (mit einem Teilchendurchmesser d) durch einen Durchmesser d+d/x mit x = 3 bis 15, vorzugsweise 4 bis 12 und besonders bevorzugt 5 bis 10, unterscheiden.

Schematisch:

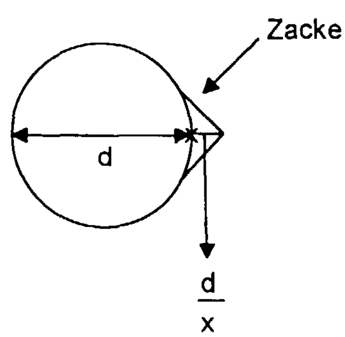


Die Herstellung des Pfropfkautschukpolymeren B) erfolgt durch Emulsionspolymerisation von harzbildenden Monomeren in Gegenwart des in Latexform vorliegenden Kautschuks. Die Pfropfkautschukpolymere B) besitzen vorzugsweise Kautschukgehalte von 30 bis 80 Gew.-%, besonders bevorzugt 35 bis 75 Gew.-% und ganz besonders bevorzugt 40 bis 70 Gew.-%.

Die Herstellung derartiger Produkte mit Pfropfkautschukteilchen ohne ausgeprägte Innenstruktur mit zackenfreier Oberfläche ist bekannt und in der Patentliteratur ausführlich beschrieben (vgl. z.B. DE 24 20 357, DE 24 20 358, DE 35 23 312, DE 33 37 940); ABS-Handelsprodukte auf Basis von Emulsionspolymerisaten enthalten in der Regel Pfropfkautschuke dieses Typs als Schlagzähmodifikatoren.

Als Kautschuke zur Herstellung des Pfropfkautschukpolymers B) werden vorzugsweise solche mit einer Glasübergangstemperatur unter 0°C eingesetzt.

Geeignet sind z.B. die bei der Herstellung von A) genannten Kautschuke. Auch zur Herstellung der Pfropfkautschukpolymeren B) sind Polybutadienkautschuke und SBR-Kautschuke mit bis zu 30 Gew.-% einpolymerisiertem Styrol bevorzugt, besonders bevorzugt ist Polybutadien.

Die Quellungsindices der zur Herstellung der Pfropfkautschukpolymeren B) einzusetzenden Kautschukpolymerisate sind unkritisch, sie können beispielsweise zwischen ca. 10 und 80 liegen.

Die Pfropfcopolymerisationsreaktion bei der Herstellung der Pfropfkautschuke B) erfolgt vorzugsweise durch gleichmäßiges Abreagieren der Monomeren über den gesamten Reaktionsverlauf.

Die Größe der zur Herstellung des Pfropfkautschukpolymeren B) einzusetzenden Kautschukteilchen kann in weiten Grenzen variiert werden, z.B. sind prinzipiell mittlere Teilchendurchmesser von ca. 50 nm bis ca. 500 nm möglich; bevorzugt sind Kautschukteilchen mit mittleren Durchmessern von ca. 70 nm bis ca. 150 nm und von ca. 200 nm bis ca. 480 nm, besonders bevorzugt von ca. 80 nm bis ca. 140 nm und von ca. 300 nm bis ca. 450 nm. Hierbei bedeuten mittlere Teilchendurchmesser $d_{50}$-Werte, die durch Ultrazentrifugenmessung (vgl. W. Scholtan und H. Lange in Kolloid Z. und Z. Polymere 250, S. 782 bis 796 (1972) bestimmt wurden.

Bei der Herstellung des Pfropfkautschukpolymeren B) eingesetzte harzbildende Monomere sind vorzugsweise Verbindungen mit einer Vinylgruppe, z.B. Styrol, $C_1$-$C_4$-alkylsubstituierte Styrole, $\alpha$-Methylstyrol, Acrylnitril, Methacrylnitril, Ester der Acrylsäure und/oder der Methacrylsäure mit $C_1$-$C_8$-aliphatischen oder cycloaliphatischen Alko-

holen, N-substituiertes Maleinimid oder Mischungen daraus. Besonders bevorzugt sind Mischungen aus Styrol und Acrylnitril, vorzugsweise im Gewichtsverhältnis 60:40 bis 80:20, wobei Styrol und/oder Acrylnitril teilweise durch copolymerisierbare Monomere, vorzugsweise durch α-Methylstyrol, Methylmethacrylat oder N-Phenylmaleinimid, ersetzt werden können.

Auch hierbei können Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge bei der Pfropfpolymerisationsreaktion). Geeignete Molekulargewichtsregler sind beispielsweise n-Dodecylmercaptan, t-Dodecylmercaptan, dimeres α-Methylstyrol.

Als Initiatoren und Emulgatoren sowie bei der Wahl der Reaktionstemperatur können die bei der Herstellung des Pfropfkautschukpolymeren A) beschriebenen Verbindungen bzw. Temperaturen auch bei der Herstellung der Pfropfkautschukpolymeren B) zum Einsatz kommen.

Die Pfropfkautschukteilchen B) müssen in den elektronenmikroskopischen Aufnahmen (d.h. in der Abbildung der Schnittfläche) keine ausgeprägte Innenstruktur wie Pfropfkautschukpolymer A) und eine runde Teilchenform (im Idealfall, gegebenenfalls leicht asymmetrisch verzerrte runde Teilchenform) mit völlig zackenfreier Oberfläche aufweisen.

Als gegebenenfalls zusätzlich einsetzbare thermoplastische kautschukfreie Harzkomponenten C) kommen beispielsweise in Frage:
Styrol/Acrylnitril-Copolymerisate, a-Methylstyrol/Acrylnitril-Copolymerisate, Styrol/α-Methylstyrol/Acrylnitril-Terpolymerisate, Styrol/Methylmethacrylat-Copolymerisate, Methylmethacrylat/Acrylnitril-Copolymerisate, Polymethylmethacrylat, Styrol/Acrylnitril/N-Phenylmaleinimid-Terpolymerisate. Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt.

Außer derartigen aus Vinylmonomeren aufgebauten Thermoplastharzen ist auch die Verwendung von z.B. aromatischen Polycarbonaten, aromatischen Polyestercarbonaten, Polyestern, Polyamiden als Harzkomponente C) möglich.

Geeignete thermoplastische Polycarbonate bzw. Polyestercarbonate sind bekannt (vgl. z.B. DE-AS 1 495 626, DE-OS 2 232 877, DE-OS 2 703 376, DE-OS 2 714 544, DE-OS 3 000 610, DE-OS 3 832 396, DE-OS 3 077 934), z.B. herstellbar durch Umsetzung von Diphenolen der Formeln (I) und (II)

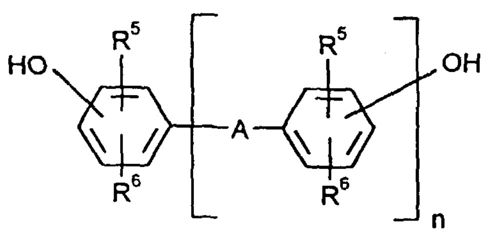

(I)

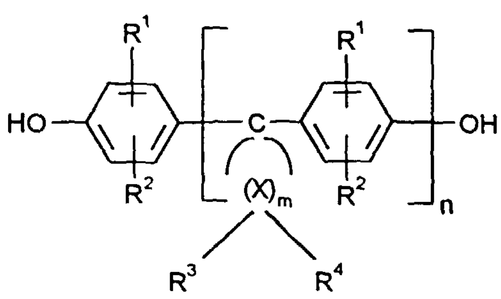

(II)

worin

A eine Einfachbindung, $C_1$-$C_5$-Alkylen, $C_2$-$C_5$-Alkyliden, $C_5$-$C_6$-Cycloalkyliden, -O-, -S-, -SO-, $-SO_2-$ oder -CO- ist,

$R^5$ und $R^6$ unabhängig voneinander für Wasserstoff, Methyl oder Halogen, insbesondere für Wasserstoff, Methyl, Chlor oder Brom stehen,

$R^1$ und $R^2$ unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten,

m eine ganze Zahl von 4 bis 7, bevorzugt 4 oder 5 ist,

n 0 oder 1 ist,

$R^3$ und $R^4$ für jedes X individuell wählbar sind und unabhängig voneinander Wasserstoff oder $C_1$-$C_6$-Alkyl bedeuten und

x Kohlenstoff bedeutet,

mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren oder mit Phosgen nach dem Verfahren in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.- Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, das heißt, Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan

und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Die Abmischung der einzelnen Komponenten A, B und gegebenenfalls C ist auf verschiedene Weise möglich.

Vorzugsweise werden die Pfropfkautschukkomponenten A) und B) einzeln oder nach dem Vermischen auf der Latexstufe durch bekannte Verfahren, beispielsweise durch Sprühtrocknung oder durch Zusatz von Salzen und/oder Säuren, Waschen der Fällprodukte und Trocknung des Pulvers isoliert. Danach werden die Pfropfkautschukpulver A) und B) (bei separater Aufarbeitung) bzw. die Pulvermischung (bei gemeinsamer Aufarbeitung) gegebenenfalls mit der Harzkomponente C) vermischt (vorzugsweise auf Mehrwalzenstühlen, Mischextrudern oder Innenknetern).

Wurde die Harzkomponente C) durch Emulsionspolymerisation erzeugt, so kann dieser Latex mit dem Latex

der Komponenten A) und B) gemischt und gemeinsam aufgearbeitet werden.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gewichtsprozente, wenn nicht anders angegeben.

## Beispiele

### Pfropfkautschuk A

40 Gew.-Teile (gerechnet als Feststoff) eines durch radikalische Polymerisation hergestellten anionisch emulgierten Polybutadienlatex mit einem $d_{50}$-Wert von 284 nm und einem Quellungsindex von 59 werden mit Wasser auf einen Feststoffgehalt von ca. 20 Gew.-% gebracht, wonach auf 63°C erwärmt und mit 0,5 Gew.-Teilen Kaliumperoxodisulfat (gelöst in Wasser) versetzt wird.

Danach werden 60 Gew.-Teile eines Gemisches aus 72 Gew.-% Styrol und 28 Gew.-% Acrylnitril und 0,1 Gew.-Teile tert.-Dodecylmercaptan innerhalb von 4 h so zudosiert, daß im Verlauf der Polymerisationsreaktion folgende Gehalte an nicht umgesetzten Monomer im Reaktionsgemisch resultierten (ermittelt durch Probenahme, Zusatz von Phenothiazin, Koagulation des Polymeranteils und Berechnung der unumgesetzten Monomermenge):

| Zeitpunkt der Probenahme (min nach Reaktionsbeginn) | Anteil an nicht umgesetztem Monomer im Reaktionsgemisch (Gew.-% bezogen auf jeweils zudosierte Monomermenge) |
|---|---|
| 20 | 8,4 |
| 40 | 14,2 |
| 60 | 19,2 |
| 80 | 20,1 |
| 100 | 18,3 |
| 120 | 16,1 |
| 140 | 13,6 |
| 160 | 11,0 |
| 180 | 7,4 |
| 200 | 2,1 |
| 220 | 1,1 |
| 240 | 2,0 |
| 260 | 0,8 |
| 280 | 0,7 |
| 300 | 0,5 |

Parallel zu den Monomeren wird innerhalb von 4 h 1 Gew.-Teil (gerechnet als Festsubstanz) des Natriumsalzes eines Harzsäuregemisches (Dresinate 731, gelöst in alkalisch eingestelltem Wasser) als Emulgator zudosiert. Nach einer 1-stündigen Nachreaktionszeit wird der Pfropfkautschuk nach Zugabe von ca. 1,0 Gew.-Teilen eines phenolischen Antioxidans mit einer Mischung aus wäßriger Magnesiumsulfat-Lösung und Essigsäure koaguliert; nach dem Waschen mit Wasser wird das resultierende Pulver bei 70°C im Vakuum getrocknet.

**Pfropfkautschuk B1**

50 Gew.-Teile (gerechnet als Feststoff) eines durch radikalische Polymerisation hergestellten anionisch emulgierten Polybutadienlatex mit einem $d_{50}$-Wert von 128 nm werden mit Wasser auf einen Feststoffgehalt von ca. 20 Gew.-% gebracht, wonach auf 63°C erwärmt und mit 0,5 Gew.-Teilen Kaliumperoxodisulfat (gelöst in Wasser) versetzt wird.

Danach werden 50 Gew.-Teile eines Gemisches aus 72 Gew.-% Styrol und 28 Gew.-% Acrylnitril innerhalb von 6 h so zudosiert, daß die Monomere während des Reaktionsverlaufs gleichmäßig abreagieren. Parallel zu den Monomeren wird innerhalb von 6 h 1 Gew.-Teil (gerechnet als Festsubstanz) des Natriumsalzes eines Harzsäuregemisches (Dresinate 731, gelöst in alkalisch eingestelltem Wasser) als Emulgator zudosiert. Die Aufarbeitung erfolgt wie unter A beschrieben.

**Pfropfkautschuk B2**

55 Gew.-Teile (gerechnet als Feststoff) eines durch radikalische Polymerisation hergestellten anionisch emulgierten Polybutadienlatex mit einem $d_{50}$-Wert von 412 nm werden mit Wasser auf einen Feststoffgehalt von ca. 20 Gew.-% gebracht, wonach auf 62°C erwärmt und mit 0,5 Gew.-Teilen Kaliumperoxodisulfat (gelöst in Wasser) versetzt wird.

Danach werden 45 Gew.-Teile eines Gemisches aus 72 Gew.-% Styrol und 28 Gew.-% Acrylnitril innerhalb von 6 h so zudosiert, daß die Monomeren während des Reaktionsverlaufs gleichmäßig abreagieren. Die sonstigen Bedingungen (Emulgator, Aufarbeitung) entsprechen denen in B1.

**Thermoplastharz C1**

Styrol/Acrylnitril-Copolymerharz (Gew.-Verhältnis Styrol:Acrylnitril = 72:28, $\overline{M}_w$ = 85.000, $\overline{M}_w/\overline{M}_n$-1 ≤ 2)

**Thermoplastharz C2**

Styrol/Acrylnitril-Copolymerharz (Gew.-Verhältnis Styrol:Acrylnitril = 72:28, $\overline{M}_w$ = 115.000, $\overline{M}_w/\overline{M}_n$-1 ≤ 2).

**Thermoplastharz C3**

α-Methylstyrol/Acrylnitril-Copolymerharz (Gew.-Verhältnis α-Methylstyrol : Acrylnitril = 72:28, $\overline{M}_w$ = 80.000, $\overline{M}_w/\overline{M}_n$-1 ≤ 2).

**ABS-Formmassen**

Die oben beschriebenen Polymerkomponenten wurden in den in Tabelle 1 angegebenen Anteilen in einem Innenkneter vermischt, wobei in den Beispielen 1 bis 4 als Additive 2 Gew.-Teile Pentaerythrittetrastearat, 0,1 Gew.-Teile eines Silikonöls und 1 Gew.-Teil eines Farbrußes zugesetzt wurden. In den Beispielen 5 bis 10 wurden als Additive 1 Gew.-Teil Pentaerythrittetrastearat, 0,5 Gew.-Teile Magnesiumstearat und ein Farbmittel (0,93 Gew.-Teile einer blauen Farbmischung bei den Beispielen 5 bis 7, 1 Gew.-Teil eines Farbrußes bei den Beispielen 8 bis 10) eingesetzt.

Nach Granulierung wurden die Formmassen durch Spritzgießen zu Prüfstäben und zu einer speziellen Platte mit Rippen (zur Beurteilung der Farbvertiefung) verarbeitet.

Weiterhin wurden folgende Daten ermittelt:
Kerbschlagzähigkeit bei Raumtemperatur ($a_k^{RT}$) und bei -40°C ($a_k^{-40°C}$) nach ISO 180/1A (Einheit: kJ/m²), Kugeldruckhärte $H_c$ nach DIN 53 456 (Einheit: N/mm²), Wärmeformbeständigkeit (Vicat B) nach DIN 53 460 (Einheit: °C), Fließverhalten MVI nach DIN 53 735 U (Einheit: cm³/10 min).

Die Beurteilung der Farbvertiefung erfolgte visuell nach folgender Abstufung:

1: sehr schwach bis nicht erkennbar
2: schwach
3: mittel
4: stark
5: sehr stark

Die Ergebnisse sind in Tabelle 2 zusammengestellt. Daraus ist ersichtlich, daß die erfindungsgemäßen Formmassen sehr gute mechanische Werte bei nur sehr schwach ausgeprägter Farbvertiefung aufweisen.

Zur Illustration wurde von einer erfindungsgemäßen Formmasse (Beispiel 8) eine elektronenmikroskopische Aufnahme angefertigt (Kontrastierung mit Osmiumtetroxid) (Abbildung 1).

Tabelle 1

| Zusammensetzungen der untersuchten Formmassen | | | | | | |
|---|---|---|---|---|---|---|
| Bsp. | Pfropfkautschuk A Gew.-Teile | Pfropfkautschuk B1 Gew.-Teile | Pfropfkautschuk B2 Gew.-Teile | Thermoplastharz C1 Gew.-Teile | Thermoplastharz C2 Gew.-Teile | Thermoplastharz C3 Gew.-Teile |
| 1 | 37,5 | - | 9,1 | - | 53,4 | - |
| 2 | 25 | - | 18,2 | - | 56,8 | - |
| 3 (Vergleich) | 50 | - | - | - | 50 | - |
| 4 (Vergleich) | - | - | 36,4 | - | 63,6 | - |
| 5 | 27 | 4,5 | 4,5 | 34 | - | 30 |
| 6 (Vergleich) | - | 4,5 | 24,5 | 41 | - | 30 |
| 7(Vergleich) | 39 | - | - | 31 | - | 30 |
| 8 | 27 | 4,5 | 4,5 | 34 | - | 30 |
| 9 (Vergleich) | - | 4,5 | 24,5 | 41 | - | 30 |
| 10(Vergleich) | 39 | - | - | 31 | - | 30 |

Tabelle 2

| Prüfdaten der untersuchten Formmassen | | | | | | |
|---|---|---|---|---|---|---|
| Bsp. | $a_k^{RT}$ (kJ/m²) | $a_k^{-40°C}$ (kJ/m²) | $H_c$ (N/mm²) | Vicat B (°C) | MVI (cm³/10 min) | Farbvertiefung |
| 1 | 38 | 23 | 88 | 99 | 6 | 2 |
| 2 | 35 | 21 | 88 | 98 | 6 | 1 |
| 3 (Vergleich) | 40 | 24 | 86 | 99 | 6 | 5 |
| 4(Vergleich) | 30 | 18 | 88 | 99 | 7 | 3 |
| 5 | 21 | 9 | 98 | 106 | 9 | 2 |
| 6(Vergleich) | 17 | 7 | 100 | 107 | 9 | 3 |
| 7(Vergleich) | 22 | 9 | 98 | 105 | 8 | 4 |
| 8 | 20 | 9 | 101 | 104 | 8 | 1 |
| 9(Vergleich) | 17 | 7 | 99 | 105 | 9 | 3 |
| 10(Vergleich) | 21 | 9 | 100 | 104 | 8 | 4 |

**Patentansprüche**

**1.** Thermoplastische Formmassen enthaltend

A) 5 bis 95 Gew.-Teile mindestens eines durch Emulsionspolymerisation hergestellten teilchenförmigen Pfropfkautschukpolymeren vom ABS-Typ, bei dem die Pfropfkautschukteilchen eine solche über transmissionselektronenmikroskopische Aufnahmen detektierbare Struktur aufweisen, in der die einzelnen Teilchen ungleichmäßige zellenförmige Einschlüsse von harzbildendem Polymer enthalten und die Oberfläche der Teilchen eine solche unregelmäßig gezackte Struktur zeigt, daß pro abgebildetem Teilchen 5 bis 30 solcher Zacken vorhanden sind, die sich von einem idealisierten runden Teilchen (mit einem Durchmesser d) durch einen Durchmesser d + d/x mit x = 3 bis 15 unterscheiden, erhältlich durch Emulsionspolymerisation von harzbildenden Monomeren in Gegenwart des in Latexform vorliegenden Kautschuks mit einem Quellungsindex ≧30 (in Toluol) und mit einer Glastemperatur unterhalb von 0°C derart, daß während 25 bis 90 % der Gesamtreaktionszeit im Reaktionsgemisch eine Menge von 5 bis 70 Gew.-% (bezogen auf gesamtes bis zum jeweiligen Zeitpunkt eingesetztes) an nicht umgesetzten Monomer vorhanden ist,

B) 95 bis 5 Gew.-Teile mindestens eines durch Emulsionspolymerisation hergestellten teilchenförmigen Propfkautschukpolymeren vom ABS-Typ, bei dem die Pfropfkautschukteilchen eine solche über transmissionselektronenmikroskopische Aufnahmen detektierbare Struktur aufweisen, in der die einzelnen Teilchen keine ausgeprägte Innenstruktur wie in A) aufweisen und eine runde Teilchenform mit völlig zackenfreier Oberfläche zeigen und gegebenenfalls

C) 0 bis 300 Gew.-Teile mindestens eines thermoplastischen kautschukfreien Harzes.

**2.** Thermoplastische Formmassen gemäß Anspruch 1, enthaltend

A) 10 bis 80 Gew.-Teile mindestens eines durch Emulsionspolymerisation hergestellten teilchenförmigen Pfropfkautschukpolymeren vom ABS-Typ, bei dem die Pfropfkautschukteilchen eine solche über transmissionselektronenmikroskopische Aufnahmen detektierbare Struktur aufweisen, in der die einzelnen Teilchen ungleichmäßige zellenförmige Einschlüsse von harzbildendem Polymer enthalten und die Oberfläche der Teilchen eine solche unregelmäßig gezackte Struktur zeigt, daß pro abgebildetem Teilchen 7 bis 25 solcher Zacken vorhanden sind, die sich von einem idealisierten runden Teilchen (mit einem Durchmesser d) durch einen Durchmesser d + d/x mit x = 4 bis 12 unterscheiden,

B) 90 bis 20 Gew.-Teile mindestens eines durch Emulsionspolymerisation hergestellten teilchenförmigen Propfkautschukpolymeren vom ABS-Typ, bei dem die Pfropfkautschukteilchen eine solche über transmissionselektronenmikroskopische Aufnahmen detektierbare Struktur aufweisen, in der die einzelnen Teilchen keine ausgeprägte Innenstruktur wie in A) aufweisen und eine runde Teilchenform mit völlig zackenfreier Oberfläche zeigen und gegebenenfalls

C) 20 bis 250 Gew.-Teile mindestens eines thermoplastischen kautschukfreien Harzes.

**3.** Thermoplastische Formmassen gemäß Anspruch 1, wobei in Komponente A) 40 bis 90 Gew.-Teile von harzbildenden Monomeren in Gegenwart von 10 bis 60 Gew.-Teilen Kautschuklatex polymerisiert werden.

**4.** Thermoplastische Formmassen gemäß Anspruch 1, wobei derart polymerisiert wird, daß während 30 bis 80 % der Gesamtreaktionszeit im Reaktionsgemisch eine Menge von 7,5 bis 60 Gew.-% an nicht umgesetztem Monomer vorhanden ist.

**5.** Thermoplastische Formmassen gemäß Ansprüchen 1 und 2, dadurch gekennzeichnet, daß die teilchenförmigen Pfropfkautschukpolymere aus Polybutadien und aufgepfropftem Copolymer aus Styrol und Acrylnitril bestehen.

**6.** Thermoplastische Formmassen gemäß Ansprüchen 1 bis 3, dadurch gekennzeichnet, daß als Thermoplastkomponente C mindestens ein Harz ausgewählt aus Styrol/Acrylnitril-Copolymer, a-Methylstyrol/Acrylnitril-Copolymer, aromatischem Polycarbonat, aromatischem Polyestercarbonat, Polyester, Polyamid enthalten ist.

**7.** Verwendung der thermoplastischen Formmassen gemäß Ansprüchen 1 bis 6 zur Herstellung von Formteilen.

**Claims**

**1.** Thermoplastic moulding compositions containing

A) 5 to 95 parts by wt of at least one particle-shaped graft rubber polymer of the ABS type manufactured by emulsion polymerisation, in which the graft rubber particles have such a structure detectable by transmission electron microscope photographs in which the individual particles contain irregular cell-shaped inclusions of resin-forming polymer and the surface of the particles shows an irregular toothed structure such that for every particle portrayed 5 to 30 of such teeth are present, which are distinguished from an idealised round particle (with a diameter d) by a diameter d + d/x with x = 13 to 15, obtainable by emulsion polymerisation of resin-forming monomers in the presence of the rubber present in latex form with a swelling index of $\geqq$ 30 (in toluene) and with a glass transition temperature of less than 0 °C such that during 25 to 90% of the total reaction time an amount of 5 to 70 wt % of unreacted monomer (referred to the total monomer used up to the respective point in time) is present in the reaction mixture,

B) 95 to 5 parts by wt of at least one particle-shaped graft rubber polymer of the ABS type manufactured by emulsion polymerisation, in which the graft rubber particles have such a structure detectable by transmission electron microscope photographs in which the individual particles do not have a pronounced inner structure as in (A) and possess a round particle shape with completely tooth-free surface, and optionally C) 0 to 300 parts by wt of at least one thermoplastic rubber-free resin.

**2.** Thermoplastic moulding compositions according to claim 1, containing

A) 10 to 80 parts by wt of at least one particle-shaped graft rubber polymer of the ABS type manufactured by emulsion polymerisation, in which the graft rubber particles have such a structure detectable by transmission electron microscope photographs in which the individual particles contain irregular cell-shaped inclusions of resin-forming polymer and the surface of the particles shows an irregular toothed structure such that for every particle portrayed 7 to 25 of such teeth are present, which are distinguished from an idealised round particle (with a diameter d) by a diameter d + d/x with x = 4 to 12,

B) 90 to 20 parts by wt of at least one particle-shaped graft rubber polymer of the ABS type manufactured by emulsion polymerisation, in which the graft rubber particles have such a structure detectable by transmission electron microscope photographs in which the individual particles do not have a pronounced inner structure as in A) and possess a round particle shape with completely tooth-free surface, and optionally

C) 20 to 250 parts by wt of at least one thermoplastic rubber-free resin.

**3.** Thermoplastic moulding compositions according to claim 1, wherein in component A) 40 to 90 parts by wt of resin-forming monomers are polymerised in the presence of 10 to 60 parts by wt of rubber latex.

**4.** Thermoplastic moulding compositions according to claim 1, wherein polymerisation is carried out such that during 30 to 80% of the total reaction time an amount of 7.5 to 60 wt % of unreacted monomer is present in the reaction mixture.

**5.** Thermoplastic moulding compositions according to claims 1 and 2, characterised in that the particle-shaped graft rubber polymers consist of polybutadiene and grafted-on copolymer of styrene and acrylonitrile.

**6.** Thermoplastic moulding compositions according to claims 1 to 3, characterised in that there is included as thermoplastic component C at least one resin selected from styrene/acrylonitrile-copolymer, α-methylstyrene/acrylonitrile-copolymer, aromatic polycarbonate, aromatic polyester carbonate, polyester, polyamide.

**7.** Use of the thermoplastic moulding compositions according to claims 1 to 6 to manufacture mouldings.

## Revendications

**1.** Matières à mouler thermoplastiques contenant

A) de 5 à 95 parties en poids d'au moins un polymère de caoutchouc greffé particulaire du type ABS préparé par polymérisation en émulsion, dans lequel les particules du caoutchouc de greffage présentent une structure détectable via des prises de vue obtenues à l'aide d'un microscope électronique à transmission, dans laquelle les particules individuelles contiennent des inclusions irrégulières de forme alvéolaire d'un polymère formateur de résine et la surface des particules présente une structure dentée, telle que de 5 à 30 dents de ce type sont présentes par particule photographiée, à ce point irrégulière qu'elle se distingue d'une particule ronde idéalisée (possédant un diamètre d) par un diamètre d + d/x où x = 3 à 15, que l'on obtient par polymérisation en émulsion de monomères formateurs de résines en présence du caoutchouc présent sous forme de latex dont l'indice de gonflement est ≥ 30 (dans du toluène) et dont la température de transition vitreuse est inférieure à 0°C de telle sorte que, pendant un laps de temps représentant de 25 à 90% du temps de réaction total, une quantité de 5 à 70% en poids (rapportés à la quantité totale de monomère mise en oeuvre jusqu'au moment respectif) de monomère n'ayant pas réagi soit présente,

B) de 95 à 5 parties en poids d'au moins un polymère de caoutchouc greffé particulaire du type ABS préparé par polymérisation en émulsion dans lequel les particules du caoutchouc de greffage présentent une structure détectable via des prises de vue obtenues à l'aide d'un microscope électronique à transmission, dans laquelle les particules individuelles ne présentent pas une structure interne prononcée comme dans A) et manifestent une forme de particule ronde possédant une surface tout à fait exempte de dents, et le cas échéant

C) de 0 à 300 parties en poids d'au moins une résine thermoplastique exempte de caoutchouc.

**2.** Matières à mouler thermoplastiques selon la revendication 1, contenant

A) de 10 à 80 parties en poids d'au moins un polymère de caoutchouc greffé particulaire du type ABS préparé par polymérisation en émulsion, dans lequel les particules du caoutchouc de greffage présentent une structure détectable via des prises de vue obtenues à l'aide d'un microscope électronique à transmission, dans laquelle les particules individuelles contiennent des inclusions irrégulières de forme alvéolaire d'un polymère formateur de résine et la surface des particules présente une structure dentée, telle que de 7 à 25 dents de ce type sont présentes par particule photographiée, à ce point irrégulière qu'elle se distingue d'une particule ronde idéalisée (possédant un diamètre d) par un diamètre d + d/x où x = 4 à 12,

B) de 90 à 20 parties en poids d'au moins un polymère de caoutchouc greffé particulaire du type ABS préparé par polymérisation en émulsion dans lequel les particules du caoutchouc de greffage présentent une structure détectable via des prises de vue obtenues à l'aide d'un microscope électronique à transmission, dans laquelle les particules individuelles ne présentent pas une structure interne prononcée comme dans A) et manifestent

une forme de particule ronde possédant une surface tout à fait exempte de dents, et le cas échéant

C) de 20 à 250 parties en poids d'au moins une résine thermoplastique exempte de caoutchouc.

**3.** Matières à mouler thermoplastiques selon la revendication 1, dans lesquelles, dans le composant A), de 40 à 90 parties en poids de monomères formateurs de résines sont polymérisées en présence de 10 à 60 parties en poids d'un latex de caoutchouc.

**4.** Matières à mouler thermoplastiques selon la revendication 1, dans lesquelles on polymérise de telle sorte que, pendant un laps de temps représentant de 30 à 80% du temps de réaction total, une quantité de 7,5 à 60% en poids de monomère n'ayant pas réagi est présente dans le mélange réactionnel.

**5.** Matières à mouler thermoplastiques selon les revendications 1 et 2, caractérisées en ce que les polymères de caoutchoucs greffés particulaires sont constitués par du polybutadiène et par un copolymère appliqué par greffage, constitué de styrène et d'acrylonitrile.

**6.** Matières à mouler thermoplastiques selon les revendications 1 à 3, caractérisées en ce qu'elles contiennent, à titre de composant thermoplastique C), au moins une résine choisie parmi le groupe comprenant un copolymère de styrène/acrylonitrile, un copolymère d'$\alpha$-méthylstyrène/acrylonitrile, un polycarbonate aromatique, un polyestercarbonate aromatique, un polyester, un polyamide.

**7.** Utilisation des matières à mouler thermoplastiques selon les revendications 1 à 6 pour la fabrication d'éléments moulés.

Fig. 1

Elektronenmikroskopische Aufnahme der Formmasse Beispiel 8

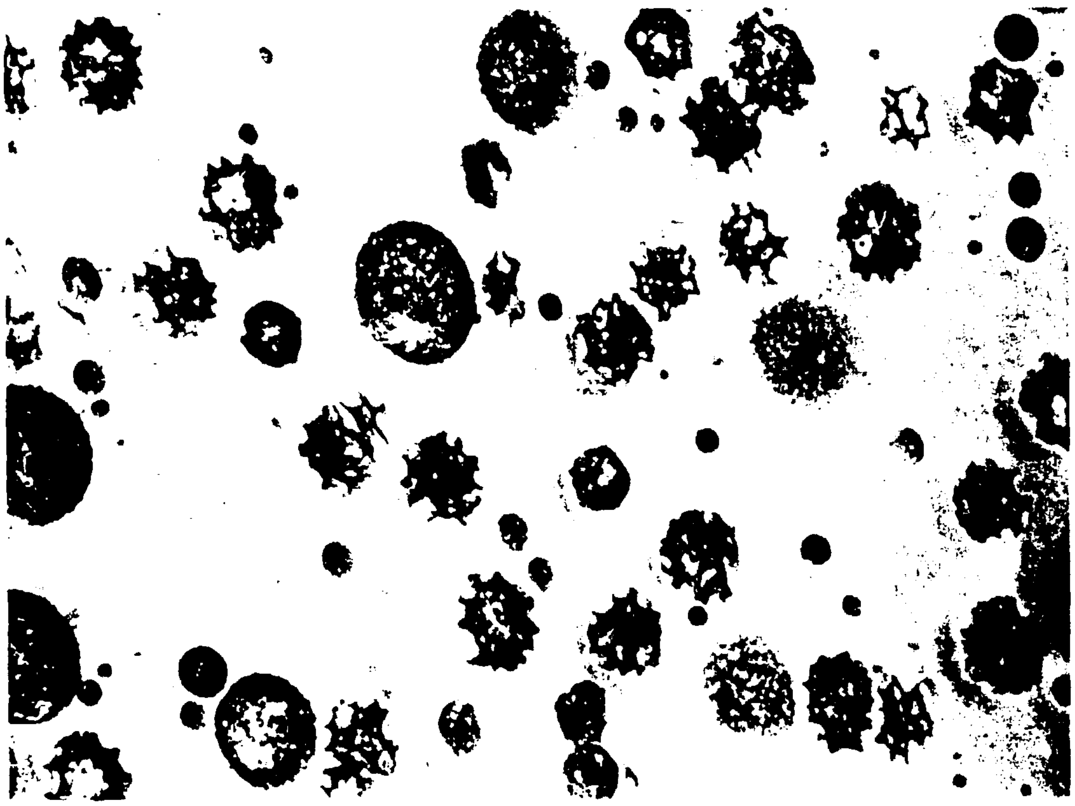

(Vergrößerung 40 000:1)